# EUROPÄISCHE PATENTSCHRIFT

(11) **EP 2 608 453 B1**
(45) Veröffentlichungstag und Bekanntmachung des Hinweises auf die Patenterteilung: **18.07.2018**
(21) Anmeldenummer: 12008189.8
(22) Anmeldetag: 07.12.2012
(51) Int. Cl.: H04L 12/24

(54) **Verfahren zum Aufbau und zur Konfigurierung einer Verbindung zwischen einem Telekommunikationsnetz und einem integrierten Zugangsgerät, und Computerprogramm dafür**
Method for constructing and for configuring a connection between a telecommunications network and an integrated access apparatus, and computer program thereto
Procédé de création et de configuration d'une liaison entre un réseau de télécommunication et un dispositif d'accès intégré, et programme informatique

(30) Priorität: 20.12.2011 DE 102011121555
(43) Veröffentlichungstag der Anmeldung: 26.06.2013
(73) Patentinhaber: Deutsche Telekom AG, 53113 Bonn (DE)
(72) Erfinder: Spanknebel, Frank R., 64521 Groß-Gerau (DE); Müller, Ingo, 65193 Wiesbaden (DE); Brinkmeyer, Steffen, 60329 Frankfurt (DE)
(74) Vertreter: Schwöbel, Thilo K.

(56) Entgegenhaltungen:
- EP-A1- 1 699 172
- US-A1- 2003 169 752
- US-A1- 2006 140 375

## Beschreibung

### Stand der Technik

Die Erfindung betrifft ein Verfahren zum Aufbau und/oder zur Konfigurierung einer Verbindung zwischen einem Telekommunikationsnetz und einem integrierten Zugangsgerät über einen Zugangsknoten des Telekommunikationsnetzes.

Die Erfindung betrifft ferner ein integriertes Zugangsgerät zum Aufbau und/oder zur Konfigurierung einer Verbindung zwischen einem Telekommunikationsnetz und dem integrierten Zugangsgerät über einen Zugangsknoten des Telekommunikationsnetzes.

Aus der US Patentschrift 7,127,049 ist ein System zur verbesserten Automatisierung der Aktivierung eines Netzwerkdienstes zwischen einem Kundenmodem und einem Fernstationsmodem über eine digitale Zugangsleitung bekannt. In dem System gemäß dem Stand der Technik ist das Fernstationsmodem in der Lage das Kundenmodem mit einem Netzwerk oder Telekommunikationsnetz zu verbinden, welches den Netzwerkdienst bereitstellt, wobei das System ein Anfragesystem umfasst, welches mit dem Fernstationsmodem gekoppelt ist.

Darüber hinaus ist aus der technischen Spezifikation TS 33.203 des "Dritte-Generation-Partnerschaftsprojekts" (3GPP, Third Generation Partnership Project) "Access security for IP-based services" ein spezielles Verfahren zum Verbindungsaufbau zwischen einem Zugangsknoten eines Telekommunikationsnetzwerks und einem Endgerät bekannt.

Solche bekannten Systeme haben eine Anzahl von Nachteilen. Beispielsweise gibt es bei dem Anfragesystem (polling system) den Nachteil, dass eine bestimmte Zeitperiode bzw. ein bestimmtes Zeitintervall definiert wird, während welchem kein Netzwerkzugang für ein Kundenmodem möglich ist.

Ferner ist es bei bisher bekannten IP-basierten Festnetzanschlüssen bekannt, dass ein integriertes Zugangsgerät (IAD, integrated access device) verwendet wird, wobei dieses integrierte Zugangsgerät mit bestimmten persönlichen Zugangsdaten bzw. Rufnummern entweder vorkonfiguriert sein muss oder (manuell oder teilmanuell) konfiguriert werden muss. Gemäß dem Stand der Technik ist bei der Inbetriebnahme von IP-basierten Festnetzanschlüssen derzeit die Konfigurierung bzw. Vorkonfigurierung bzw. die Dateneingabe über Nutzerschnittstellen folgendermaßen erforderlich bzw. vorgesehen:
-- die Benutzung einer Eingabemaske des integrierten Zugangsgeräts, beispielsweise über eine Benutzerschnittstelle, eine Anzeigeeinheit und über Betätigungselemente wie beispielsweise eine Tastatur oder Eingabetasten oder auch sogenannte Soft-Buttons auf einem Bildschirm,
-- eine Darstellung eines sogenannten Browserprogramms, beispielsweise eine Internetseite, zum Anstoß der automatischen Konfiguration, wobei hierzu insbesondere ein Rechner an das integrierte Zugangsgerät angeschlossen werden muss,
-- die Vorkonfiguration bei der Auslieferung und/oder
-- Anlieferung der Daten auf einer SIM-Karte.

Infolgedessen ist der Aufwand für die Konfigurierung des integrierten Anschlussgerätes deshalb relativ hoch, weil entweder das integrierte Anschlussgerät mit Merkmalen oder Eigenschaften versehen sein muss, wie beispielsweise ein Bildschirm, eine Tastatur oder dergleichen, die ausschließlich oder zumindest vorrangig lediglich zum Zeitpunkt der Konfigurierung des integrierten Anschlussgerätes genutzt werden, oder aber dass zusätzlich zu dem integrierten Anschlussgerät weitere Geräte wie beispielsweise ein weiterer Computer oder ein weiteres Notebook erforderlich sind, um eine Konfigurierung des integrierten Anschlussgerätes vorzunehmen.

Die Benutzung von zusätzlichen Geräten, insbesondere Computern bzw. sonstigen Rechnergeräten, die zur Konfigurierung an das integrierte Anschlussgerät an dieses angeschlossen werden müssen, führt bei einer erheblichen Anzahl von Endkunden zu erheblichen Schwierigkeiten bzw. Befürchtungen und einem damit einhergehenden Bedarf an Beratung bzw. Unterstützung (bzw. es kann nicht davon ausgegangen werden, dass ein Endkunde über entsprechende Geräte verfügt), so dass auch vor diesem Hintergrund der Aufwand für die Konfigurierung des integrierten Anschlussgerätes zur Inbetriebnahme einer Verbindung zu einem Telekommunikationsnetz aufwändig, langwierig und ggf. teuer ist.

### Offenbarung der Erfindung

Der Erfindung liegt die Aufgabe zugrunde, ein Verfahren zum Aufbau und/oder zur Konfigurierung einer Verbindung zwischen einem Telekommunikationsnetz und einem integrierten Zugangsgerät über einen Zugangsknoten des Telekommunikationsnetzes bzw. ein solches integriertes Zugangsgerät bereitzustellen, welches die Nachteile des Standes der Technik nicht aufweist und eine einfache, schnelle und kostengünstige Konfigurierung und damit einen einfachen, schnellen und kostengünstigen Anschluss des integrierten Anschlussgerätes bzw. weiterer, im Haushalt des Endkunden vorhandener und zum Anschluss an das Telekommunikationsnetz, insbesondere ein Internet Protokoll basiertes (bzw. IP-basiertes) Telekommunikationsnetz, vorgesehener Geräte zu ermöglichen, um die Telekommunikationsdienste des Telekommunikationsnetzes - insbesondere bei der Erstinbetriebnahme für die darauffolgende dauerhafte Nutzung - möglichst schnell, einfach und kostengünstig nutzen zu können.

Diese Aufgabe wird erfindungsgemäß gelöst durch ein Verfahren gemäß Anspruch 1, ein System gemäß Anspruch 9, und ein Computerprogramm gemäß Anspruch 10. Es ist hierdurch gemäß der vorliegenden Erfindung in vorteilhafter Weise möglich, dass ein Benutzer allein durch die Verwendung einer Sprachverbindung bzw. durch die Bedienung eines Sprachdialogsystems über gesprochene bzw. über die Tastatur eines Telefons eingegebene Informationen eine Konfigurierung des integrierten Zugangsgeräts dergestalt vornehmen kann, dass das integrierte Zugangsgerät im vierten Schritt des erfindungsgemäßen Verfahrens mittels eines Datenaustauschs über den physikalischen Kommunikationskanal zwischen dem integrierten Zugangsgerät und dem Zugangsknoten des Telekommunikationsnetzes ohne weiteres Zutun des Benutzers bzw. ohne aufwändige, beratungsintensive und kostenintensive Benutzereingriffe bzw. die Anbindung weiterer Geräte (wie beispielsweise ein bezüglich des integrierten Zugangsgeräts externer Rechner oder dergleichen) bewerkstelligt werden kann.

Der physikalische Kommunikationskanal zwischen dem Zugangsknoten des Telekommunikationsnetzes und dem integrierten Zugangsgerät (nachfolgend auch als physischer Kommunikationskanal bezeichnet) ist erfindungsgemäß jedwede drahtgebundene Kommunikationsverbindung bzw. jeder drahtgebundene Kommunikationskanal. Solch ein drahtgebundener Kommunikationskanal umfasst üblicherweise zwei Enden, nämlich ein Ende, welches mit dem integrierten Zugangsgerät verbunden ist, und ein Ende, welches mit dem Zugangsknoten des Telekommunikationsnetzes verbunden ist. Der Zugangsknoten des Telekommunikationsnetzes ist im Kontext der vorliegenden Erfindung jedes Gerät, welches das Zugangsnetzwerk, welches Teil des Kommunikationsnetzwerkes ist sowie das sogenannte Heim-Netz, terminiert. Das integrierte Zugangsgerät ist zu verstehen als Gerät, welches typischerweise in einem Gebäude oder einer Wohnung des Endkunden lokalisiert ist, beispielsweise als sogenanntes Heim-Gateway bzw. in Form eines sogenannten Routers. Solche Geräte weisen jedenfalls eine Router-Funktionalität auf. Alternativ dazu ist das integrierte Zugangsgerät erfindungsgemäß jedes Gerät, welches in der Lage ist, eine Internet-Protokoll-Konnektivität (IP-connectivity) herzustellen und an einen physischen Kommunikationskanal angeschlossen werden kann, beispielsweise dadurch, dass das integrierte Anschlussgerät mit einem Transfer-Punkt oder einem Gebäudeeingangspunkt verbunden wird bzw. ein Stecker eingesteckt wird, oder dadurch, dass ein mobiles Engerät, das über ein Mobilfunkkommunikationsnetz (beispielsweise gemäß der zweite Generation von Mobilfunknetzen (2G) und/oder gemäß der dritten Generation von Mobilfunknetzen (3G) und/oder gemäß der vierten Generation von Mobilfunknetzen (4G)) mit dem IP-Netz verbunden werden kann, verwendet wird.

Der physikalische Kommunikationskanal zwischen dem Zugangsknoten und dem integrierten Anschlussgerät wird oftmals als die sogenannte letzte Meile (zwischen den Netzwerkkomponenten des Zugangsnetzwerkes des Telekommunikationsnetzes und den Netzwerkkomponenten des Endbenutzers, welche auch als Customer Premises Equipment bezeichnet werden) bezeichnet. Der Begriff "physikalischer Kommunikationskanal (physischer Kommunikationskanal) zwischen dem Zugangsknoten des Telekommunikationsnetzes und dem integrierten Anschlussgerät" ist im Rahmen der vorliegenden Erfindung dahingehend zu verstehen, dass dieser physikalische Kommunikationskanal nicht notwendigerweise eine einzelne drahtgebundene Kommunikationsverbindung zwischen dem integrierten Anschlussgerät und dem Anschlussknoten des Telekommunikationsnetzes sein muss, sondern er kann beispielsweise auch unter Verwendung eines sogenannten aktiven Geräts, etwa in Form eines ONU (optical network unit) bzw. eines ONT (optical network termination), realisiert sein für den Fall, dass der physikalische Kommunikationskanal als ein sogenanntes geteiltes Medium (shared medium) etwa in Form eines optischen Glasfasernetzes, eines Kabelnetzes oder Ähnlichem realisiert ist. Der Begriff physikalischer Kommunikationskanal kann sich weiterhin ebenfalls auf die zumindest teilweise Nutzung einer drahtlosen Kommunikationsverbindung, etwa als sogenannte Punkt-zu-Punkt-Funkverbindung (oder auch direktionale Funkverbindung) zwischen dem Zugangsknoten des Telekommunikationsnetzes und dem integrierten Anschlussgerät, beziehen.

Beispiele für drahtgebundene Kommunikationsverbindungen bzw. Kommunikationskanäle sind etwa ein Kupferleitungspaar, ein Kommunikationskanal über eine optische Glasfaser bzw. optische Faserverbindung oder ein Kommunikationskanal über eine Kabelfernsehverbindung bzw. einen Kabelfernsehzugang. Im Fall eines Kommunikationskanals über ein Kupferleitungspaar ist das integrierte Zugangsgerät mit dem Telekommunikationsnetz über eine sogenannte TAE (Telekommunikationsanschlusseinheit), einen sogenannten APL (Anschlusspunktlinientechnik, access point line technology or transfer point) verbunden und es führt ein Kupferleitungspaar zwischen der Einheit TAE/APL (im Heimbereich des Endkunden) zu einem DSLAM (digital subscriber line access multiplexer), welcher als Zugangsknoten des Telekommunikationsnetzes dient; das integrierte Zugangsgerät ist in diesem Fall mit der Einheit TAE/APL verbunden, insbesondere über eine drahtgebundene Verbindung. Im Fall dass der Kommunikationskanal über eine optische Glasfaserkabelverbindung erfolgt, ist das integrierte Zugangsgerät, beispielsweise mittels eines sogenannten ONU (optical network unit) oder ONT (optical network termination), mit dem Telekommunikationsnetz verbunden und die optische Glasfaserverbindung verläuft zwischen der Einheit ONU/ONT (im Heimbereich des Endkunden) zu einem OLT (optical line terminal), welcher als Zugangsknoten zu dem Telekommunikationsnetz dient. Im Fall eines Kommunikationskanals über einen Kabelfernsehzugang, ist das integrierte Zugangsgerät mit dem Telekommunikationsnetz beispielsweise mittels eines sogenannten CM (cable modem) verbunden und der Kabelfernsehzugang verläuft zwischen der CM-Einheit (im Heimbereich des Endbenutzers) bis zu einer CMTS (cable modem terminal system), welches als Zugangsknoten zu dem Telekommunikationsnetz dient.

Bei der vorliegenden Erfindung ist es besonders bevorzugt, dass der logische Kommunikationskanal zwischen einem Internet-Protokoll-Netz-Randknoten (internet protocol edge node) und dem integrierten Zugangsgerät aufgebaut wird. Der logische Kommunikationskanal entspricht insbesondere einer Internet-Protokoll-Sitzung (IP session) bzw. einer Internet-Protokoll-Verbindung. Der physikalische Kommunikationskanal (zwischen dem Telekommunikationsnetz und dem integrierten Zugangsgerät) ist zwischen dem Zugangsknoten einerseits und dem integrierten Zugangsgerät andererseits aufgebaut.

Gemäß sämtlicher Ausführungsformen der vorliegenden Erfindung ist es möglich und auch bevorzugt, dass die Funktionalität des Internet-Protokoll-Netz-Randknotens zumindest teilweise in den Netzknoten bzw. die Netzeinheit integriert ist, welche die Funktionalität des Zugangsknotens aufweist bzw. umgekehrt (d. h., dass die Funktionalität des Zugangsknotens zumindest teilweise in den Netzwerk-Knoten bzw. die Netzwerkeinheit integriert ist, welche die Funktionalität des Internet-Protokoll-Netz-Randknotens aufweist).

Erfindungsgemäß ist es besonders bevorzugt, dass die im dritten Schritt benutzte Sprachverbindung eine Telefonverbindung unter Benutzung des integrierten Zugangsgeräts und unter Benutzung eines mit dem integrierten Zugangsgerät verbundenen Telefongeräts ist.

Hierdurch ist es erfindungsgemäß in besonders einfacher Weise möglich, die zur praktischen Bereitstellung der Verbindung zwischen dem integrierten Zugangsgerät und dem Telekommunikationsnetz erforderliche Konfigurierung des integrierten Zugangsgeräts zu bewerkstelligen bzw. die Vorbereitungen zur Konfigurierung des integrierten Zugangsgeräts durchzuführen. Erfindungsgemäß ist hierzu insbesondere vorgesehen, dass ein Telefongerät, beispielsweise ein herkömmliches drahtgebundenes analoges Telefongerät oder auch ein herkömmliches analoges Schnurlos-Telefon, mit dem integrierten Zugangsgerät verbunden wird, beispielsweise dadurch, dass ein Stecker des analogen Telefongeräts in eine Buchse des integrierten Zugangsgeräts gesteckt wird. Es wird anschließend eine Telefonverbindung, d. h. eine Sprachverbindung, des Telefongeräts unter Benutzung des integrierten Zugangsgeräts und unter Benutzung des physikalischen Kommunikationskanals zwischen dem integrierten Zugangsgerät und dem Zugangsknoten des Telekommunikationsnetzes hergestellt, mittels der ein interaktives Sprachdialogsystem bedient wird. Über das interaktive Sprachdialogsystem ist es erfindungsgemäß in besonders einfacher und intuitiver Weise möglich, dass Konfigurationsinformation dem integrierten Zugangsgerät und/oder dem Telekommunikationsnetz bzw. einer Netzeinheit bzw. einem Netzknoten des Telekommunikationsnetzes zur Verfügung gestellt wird derart, dass entweder die Kommunikation des integrierten Zugangsgeräts bereits durchgeführt wird oder aber die Konfigurierung des integrierten Zugangsgeräts vorbereitet wird. Erfindungsgemäß ist es alternativ zur Benutzung eines analogen Telefongeräts (drahtgebunden oder schnurlos) ebenfalls möglich und bevorzugt, dass ein digitales Telefongerät (ISDN-Telefongerät) für die Benutzung des interaktiven Sprachdialogsystems über die Sprachverbindung benutzt wird. Hierfür ist es normalerweise erforderlich, dass eine entsprechende Drahtschnittstelle bzw. Anschlussbuchse zum Anschluss des digitalen Telefongeräts am oder im integrierten Zugangsgerät vorhanden ist.

Ferner ist es erfindungsgemäß alternativ zu einer drahtgebundenen Verbindung zwischen dem (analogen oder ISDN) Telefongerät und dem integrierten Zugangsgerät ebenfalls möglich und bevorzugt, dass das integrierte Zugangsgerät und das (analoge bzw. ISDN) Telefongerät drahtlos miteinander verbunden sind, beispielsweise über eine Funkverbindung, etwa in Form einer kurzreichweitigen Funkverbindung, wie etwa eine Bluetooth-Verbindung oder auch eine WLAN-Verbindung (Wireless Local Area Network) oder auch ein DECT-Verbindung (Digital Enhaced Cordless Telephony) bzw. eine CAT-iq-Verbindung (Cordless Advanced Technology - internet and quality).

Erfindungsgemäß ist es ferner bevorzugt, dass zum Aufbau der im dritten Schritt benutzten Sprachverbindung eine Rufnummer benutzt wird,
-- die im integrierten Zugangsgerät gespeichert ist oder
-- die nach der Erkennung und Identifizierung des integrierten Zugangsgeräts durch das Telekommunikationsnetz dem physikalischen Kommunikationskanal zwischen dem Zugangsknoten des Telekommunikationsnetzes und dem integrierten Zugangsgerät zugeordnet wird.

Hierdurch ist es erfindungsgemäß in vorteilhafter Weise möglich, dass wiederum ohne weiteren Konfigurationsaufwand seitens eines Endkunden bzw. ohne weitere mögliche Fehlerquelle für den Vorgang der Konfigurierung der Verbindung zwischen dem Telekommunikationsnetz und dem integrierten Zugangsgerät eine einfache Anbindung und Realisierung dieser Verbindung ermöglicht wird. Die Speicherung der für die Sprachverbindung benutzten Rufnummer im integrierten Zugangsgerät hat den Vorteil, dass das integrierte Zugangsgerät, welches vom Endkunden in Benutzung genommen wird, sofort in der Lage ist, die zur Konfiguration benötigte Sprachverbindung mit dem interaktiven Sprachdialogsystem aufzubauen. Allerdings ist es bei dieser Alternative in der Regel notwendig, speziell konfigurierte integrierte Zugangsgeräte zu verwenden, nämlich solche, die zumindest einen Zielpunkt, nämlich eine Anwahlnummer für die Sprachverbindung innerhalb des Telekommunikationsnetzes gespeichert haben. Gemäß der alternativen Ausführungsform, wonach die zur Benutzung des interaktiven Sprachdialogsystems zu benutzende Rufnummer nach der Erkennung und Identifizierung des integrierten Zugangsgeräts durch das Telekommunikationsnetz dem physikalischen Kommunikationskanal zwischen dem Netzknoten des Telekommunikationsnetzes und dem integrierten Zugangsgerät zugeordnet wird, kann eine flexiblere bzw. allgemeinere Nutzung von integrierten Zugangsgeräten ohne speziell konfigurierte integrierte Zugangsgeräte bzw. mit solchen integrierten Zugangsgeräten ermöglicht werden, die weniger speziell konfiguriert sind und damit in der Regel auch in größerer Stückzahl und daher kostengünstiger herstellbar sind.

Erfindungsgemäß ist es gemäß einer weiteren Ausführungsform ferner auch bevorzugt, dass über die im dritten Schritt benutzte Sprachverbindung wenigstens eine Vertragsidentifizierungsinformation zum Telekommunikationsnetz übertragen wird. Hierbei ist insbesondere vorgesehen, dass bei der Benutzung des interaktiven Sprachdialogsystems der Endkunde aufgefordert wird seine, beispielsweise per Post oder auf sonstige Weise empfangene benutzerindividuelle Zugangsnummer und sein persönliches Kennwort einzugeben. Dies kann insbesondere unter Benutzung einer Spracheingabe oder über die Telefontastatur bei der Benutzung des interaktiven Sprachdialogsystems geschehen.

Erfindungsgemäß ist es ferner bevorzugt, dass die im dritten Schritt benutzte Sprachverbindung eine Telefonverbindung ohne Benutzung des integrierten Zugangsgeräts und des physikalischen Kommunikationskanals zwischen dem Zugangsknoten des Telekommunikationsnetzes und dem integrierten Zugangsgerät ist, insbesondere eine Sprachverbindung unter Verwendung eines Mobilfunktelefongeräts.

Hierdurch ist es in besonders vorteilhafter Weise möglich, dass kein Anschluss oder keine Drahtlosverbindung eines Telefongeräts mit dem integrierten Anschlussgerät zwingend erforderlich ist. Die Zuordnung zwischen dem Telefonanruf bzw. der Telefonverbindung unter Benutzung eines Telefongeräts bzw. eine Telefonverbindung, die nicht über das integrierte Zugangsgerät und nicht unter Benutzung des physikalischen Kommunikationskanals zwischen Zugangsknoten und integriertem Zugangsgerät aufgebaut ist einerseits und dem erstellten physikalischen Kommunikationskanals zwischen dem integrierten Zugangsgerät und dem Zugangsknoten des Telekommunikationsnetzes andererseits wird beispielsweise über die Telefonverbindung zur Übertragung der Information hergestellt, beispielsweise ebenfalls unter Benutzung des interaktiven Sprachdialogsystems über die aufgebaute Sprachverbindung. Beispielsweise kann es sich bei dieser Identifizierungsinformation zum Zwecke der Zuordnung der parallel zum physikalischen Kommunikationskanal, d. h. nicht den physikalischen Kommunikationskanal benutzenden Telefonverbindung und der Anbindung des integrierten Zugangsgeräts an das Telekommunikationsnetz über den Zugangsknoten um eine Identifikationsinformation des Zugangsknotens, etwa eine Seriennummer oder dergleichen, handeln.

Bei dieser Identifikationsinformation kann es sich beispielsweise um eine Information handeln, die fest mit dem integrierten Zugangsgerät verbunden ist, beispielsweise auf einem Aufkleber, einer Gravur am Gehäuse des integrierten Zugangsgeräts. Alternativ dazu kann diese Identifikationsinformation auch - beispielsweise per Brief oder per E-Mail oder über einen sonstigen Kommunikationskanal, insbesondere per SMS-Nachricht (Short Message Service) - dem Endkunden übertragen werden zwecks Eingabe der Identifikationsinformation bei Benutzung des interaktiven Sprachdialogsystems über die Sprachverbindung, die parallel zu dem physikalischen Kommunikationskanal existiert.

Erfindungsgemäß ist es weiterhin ebenfalls bevorzugt vorgesehen, dass der physikalische Kommunikationskanal einer auf den Zugangsknoten bezogenen Netzzugangs-Identifizierungsinformation zugeordnet ist, wobei das Telekommunikationsnetz eine öffentliche oder private Internet-Protokoll-Adresse zum integrierten Zugangsgerät und zur Benutzung durch das integrierte Zugangsgerät zur Kommunikation mit einem Internet-Protokoll-Netz-Randknoten (internet protocol edge node) des Telekommunikationsnetzes überträgt, wobei die Internet-Protokoll-Adresse mit der Netzzugangs-Identifizierungsinformation und mit einer Internet-Protokoll-Sitzung (IP session) oder einer Internet-Protokoll-Verbindung verknüpft ist, welche einen zwischen dem Internet-Protokoll-Netz-Randknoten des Telekommunikationsnetzes und dem integrierten Zugangsgerät initiierten logischen Kommunikationskanal realisiert.

Ferner ist es erfindungsgemäß bevorzugt, dass das Telekommunikationsnetz der öffentlichen oder privaten Internet-Protokoll-Adresse initial ein erstes Funktionalitätsniveau zuordnet und dass das Telekommunikationsnetz der öffentlichen oder privaten Internet-Protokoll-Adresse ein zweites Funktionalitätsniveau für den Fall zuordnet, dass das Telekommunikationsnetz in der Lage ist, die Netzzugangs-Identifizierungsinformation mit einer Vertrags-Identifizierungsinformation zu föderieren.

Hierdurch ist es erfindungsgemäß in vorteilhafter Weise möglich, dass der Initialisierungsprozess eines Internet-Protokoll-basierten Dienstes durch verschiedene Funktionalitätsniveaus vereinfacht wird. Das erste Funktionalitätsniveau bezieht sich hierbei auf eine reduzierte Funktionalität bzw. ein reduziertes Funktionalitätsniveau, beispielsweise lediglich das eines grundlegenden Verbindungsniveaus, und dass sich das zweite Funktionalitätsniveau auf eine erweiterte Funktionalität bezieht, insbesondere bezogen auf einen bestimmten Dienst oder bestimmte Dienste, die vom Dienstbereitsteller dann bereit gestellt werden, wenn die Vertrags-Identifizierungsinformation der Netzzugangs-Identifizierungsinformation zugeordnet werden kann. Bei der Vertrags-Identifizierungsinformation handelt es sich insbesondere um eine Autorisierungsinformation, welche von einer Vertragsbeziehung oder von einer zumindest möglichen Vertragsbeziehung (in der Zukunft) abgeleitet wird. Dieser Vorgang der Zuordnung zwischen der Vertrags-Identifizierungsinformation und der Netzzugangs-Identifizierungsinformation wird im Rahmen der vorliegenden Erfindung auch als Föderierung bezeichnet. Insbesondere umfasst das erste Funktionalitätsniveau eine reduzierte Funktionalität dahingehend, dass lediglich eine grundlegende Verbindung hergestellt wird, beispielsweise erlaubt ist, das integrierte Zugangsgerät bzw. angeschlossene Geräte mit einer Kundenschnittstelle zu verbinden (customer self care interface), welche insbesondere dazu benutzt werden kann, die Verbindung bzw. das integrierte Zugangsgerät zu konfigurieren. Eine solche reduzierte Funktionalität bzw. ein reduziertes (erstes) Funktionalitätsniveau wird im Folgenden auch als eingegrenztes Gebiet bzw. Englisch als "walled garden" bezeichnet.

Erfindungsgemäß ist es ferner bevorzugt, dass der logische Kommunikationskanal durch Benutzung von wenigstens einer Authentifizierungsinformation aufgebaut wird, wobei die wenigstens eine Authentifizierungsinformation eine innerhalb des Telekommunikationsnetzes existierende Vertrauensinformation ist.

Dies bedeutet im Rahmen der vorliegenden Erfindung, dass zum Aufbau einer vollständig funktionsfähigen Internet-Protokoll-Sitzung (IP session) oder einer Internet-Protokoll-Verbindung (d. h. der Aufbau der logischen Verbindung bzw. des logischen Kommunikationskanals zwischen dem Internet-Protokoll-Netz-Randknoten und dem integrierten Zugangsgerät) keine Verteilung von Zugangsinformationen bzw. Vertrauensinformationen bzw. personalisierte und vorkonfigurierte integrierte Anschlussgeräte notwendig sind. Es ist gemäß dieser Ausführungsform der vorliegenden Erfindung lediglich erforderlich, dass das Telekommunikationsnetz, d. h. eine Steuereinheit oder eine Überwachungseinheit, beispielsweise als Netzknoten, über die Existenz eines spezifischen Anschlusses des Zugangsknotens (insbesondere die sog. line ID) informiert ist und dass das integrierte Zugangsgerät ein willkürlich konfiguriertes integriertes Zugangsgerät ist, welches physikalisch an einen solchen spezifischen Zugang oder Anschlusspunkt des Anschlussknotens angeschlossen ist oder mit diesem verbunden ist. Basierend lediglich auf diesen technischen Bedingungen kann eine Internet-Protokoll-Sitzung (IP session) oder Internet-Protokoll-Verbindung mit dem integrierten Anschlussgerät gemäß der vorliegenden Erfindung aufgebaut werden. Es ist gemäß der vorliegenden Erfindung bevorzugt, dass initial, d. h. zu Beginn, eine solche Internet-Protokoll-Konnektivität oder Internet-Protokoll-Verbindung oder -Sitzung (d. h. der logische Kommunikationskanal) lediglich dahingehend funktioniert, dass das erste Funktionalitätsniveau freigeschaltet ist oder betreibbar ist. Erst durch Eingabe der Vertrags-Identifizierungsinformation kann die Aktivierung des zweiten Funktionalitätsniveaus eingeleitet werden.

Die vorliegende Erfindung beschreibt beispielhaft ein integriertes Zugangsgerät (IAD, integrated access device) zum Aufbau und/oder zur Konfigurierung einer Verbindung zwischen einem Telekommunikationsnetz und dem integrierten Zugangsgerät über einen Zugangsknoten des Telekommunikationsnetzes, wobei das integrierte Zugangsgerät zur Erstellung eines physikalischen Kommunikationskanals zwischen dem Zugangsknoten des Telekommunikationsnetzes und dem integrierten Zugangsgerät vorgesehen ist, wobei das integrierte Zugangsgerät zur Erkennung und Identifizierung durch das Telekommunikationsnetz vorgesehen ist, wobei zur Konfigurierung des integrierten Zugangsgeräts ferner vorgesehen ist, ein interaktives Sprachdialogsystem über eine Sprachverbindung zu starten und wobei zur Konfigurierung des integrierten Zugangsgeräts ferner die Übertragung von Konfigurationsdaten über den physikalischen Kommunikationskanal vorgesehen ist.

Hierdurch ist es erfindungsgemäß in besonders vorteilhafter Weise möglich, das integrierte Zugangsgerät besonders einfach und kostengünstig aufzubauen, weil insbesondere keine Eingabeschnittstellen, insbesondere eine grafische Benutzerschnittstelle oder Eingabetasten oder Betätigungselemente, vorhanden sein müssen. Ferner kann durch die Benutzung des Sprachdialogsystems auch die Konfiguration des integrierten Anschlussgeräts vereinfacht werden. Beispielsweise ist es insbesondere bevorzugt, dass das integrierte Zugangsgerät derart konfiguriert ist, dass
-- die zum Aufbau der Sprachverbindung benutzte Rufnummer im integrierten Zugangsgerät gespeichert ist oder dass
-- das integrierte Zugangsgerät derart konfiguriert ist, dass eine Zuordnung der zum Aufbau der Sprachverbindung benutzten Rufnummer den physikalischen Kommunikationskanal zwischen dem Zugangsknoten des Telekommunikationsnetzes und dem integrierten Zugangsgerät durch das Telekommunikationsnetz vorgesehen ist. Ferner ist es auch bei dem integrierten Zugangsgerät vorgesehen, dass der physikalische Kommunikationskanal einer auf den Zugangsknoten bezogenen Netzzugangs-Identifizierungsinformation zugeordnet ist, wobei die Übertragung einer öffentlichen oder privaten Internet-Protokoll-Adresse durch das Telekommunikationsnetz zum integrierten Zugangsgerät und zur Benutzung durch das integrierte Zugangsgerät zur Kommunikation mit einem Internet-Protokoll-Netz-Randknoten (internet protocol edge node) des Telekommunikationsnetzes vorgesehen ist, wobei die Internet-Protokoll-Adresse mit der Netzzugangs-Identifizierungsinformation und mit einer Internet-Protokoll-Sitzung (IP session) oder einer Internet-Protokoll-Verbindung verknüpft ist, welche einen zwischen dem Internet-Protokoll-Netz-Randknoten des Telekommunikationsnetzes und dem integrierten Zugangsgerät initiierten logischen Kommunikationskanal realisiert.

Ferner bezieht sich die vorliegende Erfindung auch auf ein Computerprogramm mit Programm-Code-Mitteln, mit deren Hilfe alle Schritte des erfindungsgemäßen Verfahrens durchführbar sind, wenn das Computerprogramm auf einer programmierbaren Einrichtung oder einem integrierten Anschlussgerät ausgeführt wird.

Weiterhin ist Gegenstand der vorliegenden Erfindung ein Computerprogrammprodukt mit einem computerlesbaren Medium und einen auf dem computerlesbaren Medium gespeicherten Computerprogramm mit Programmcodemitteln, die dazu geeignet sind, dass alle Schritte des erfindungsgemäßen Verfahrens durchführbar sind, wenn das Computerprogramm auf einem integrierten Anschlussgerät ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt schematisch ein Beispiel eines Telekommunikationsnetzes mit einer Mehrzahl von verbundenen integrierten Zugangsgeräten.
- **Figur 2**: zeigt schematisch ein Ablaufdiagramm zur Realisierung des erfindungsgemäßen Verfahrens.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

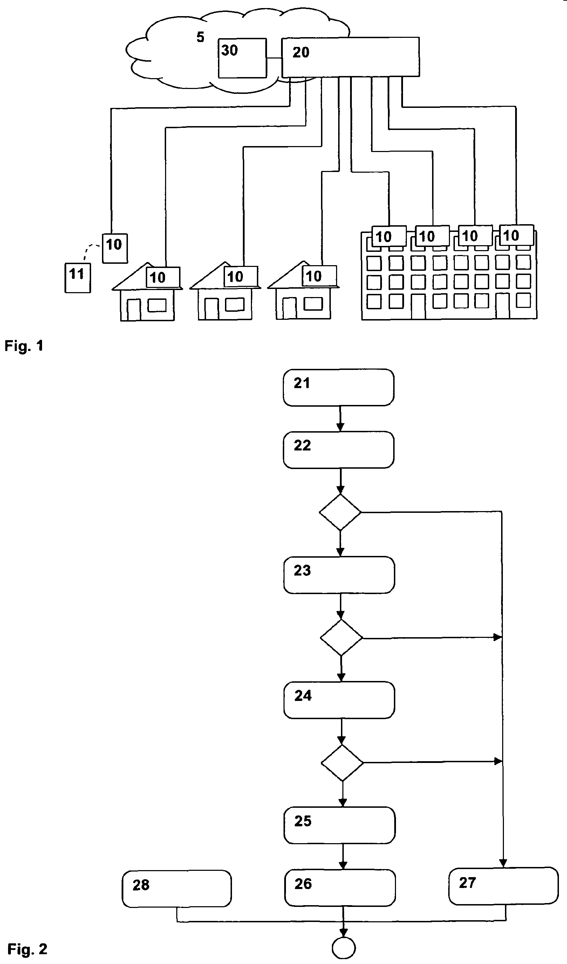

In Figur 1 ist ein Beispiel eines Telekommunikationsnetzes 5 mit einer Mehrzahl daran angeschlossener Benutzer bzw. Kunden schematisch wiedergegeben. Der Benutzer bzw. Kunde ist mit dem Telekommunikationsnetz 5 über ein integriertes Zugangsgerät 10 verbunden. Das integrierte Zugangsgerät 10 weist die Möglichkeit auf, eine Internet-Protokoll-Verbindung bzw. Internet-Protokoll-Konnektivität herzustellen. Es hat daher die Funktionalität eines Routers bzw. eines Home Gateways (d.h. eines Anschlussgeräts zum Netzabschluss eines privaten Netzes).

Das integrierte Zugangsgerät 10 ist mit dem Telekommunikationsnetz 5 über einen Zugangsknoten 20 verbunden. Der Zugangsknoten 20 ist bevorzugt ein DSLAM (digital subscriber line access mulitplexer), welcher entweder im Gebäude des Benutzers (beispielsweise einer Wohnung oder eines Hauses) installiert ist, insbesondere bei größeren Gebäuden mit einer Vielzahl von Benutzern, oder welcher in einer bestimmten Entfernung vom Gebäude des Benutzers, beispielsweise in einer Entfernung von weniger als ein paar Kilometern, bevorzugt in einer Entfernung von weniger als 1.000 Metern, besonders bevorzugt in einer Entfernung von weniger als 500 Metern, vom Gebäude des Benutzers angeordnet ist. Alternativ dazu kann der Zugangsknoten 20 auch als OLT (optical line terminal) ausgebildet sein. Der Zugangsknoten 20 ist mit einem Internet-Protokoll-Netz-Randknoten 30 verbunden, der ebenfalls Teil des Telekommunikationsnetzes 5 ist. Der Internet-Protokoll-Netz-Randknoten 30 administriert die Verteilung von Internet-Protokoll-Adressen und verschiedene Funktionalitätsniveaus, welche mit verschiedenen Internet-Protokoll-Adressen verknüpft sind, die den Internet-Protokoll-Netz-Randknoten 30 erreichen können. Der Internet-Protokoll-Netz-Randknoten 30 kann als Routing-Gerät verstanden werden, welcher eine Mehrzahl von Zugangs- und Freigaberegeln aufweist, die sich auf verschiedene Internet-Protokoll-Adressen beziehen. Insbesondere steuert bzw. überwacht der Internet-Protokoll-Netz-Randknoten 30, welche Adressen und Funktionalitäten für ein bestimmtes integriertes Zugangsgerät 10 bzw. für eine bestimmte Anzahl von integrierten Zugangsgeräten 10 zugänglich sind, insbesondere auf den Ebenen 3 und 4 (Layer 3 bzw. 4) des OSI-Modells (Open Systems Interconnection Model).

In Figur 2 ist ein Ausführungsbeispiel für ein Ablaufdiagramm zur Realisierung des erfindungsgemäßen Verfahrens abgebildet. Das erfindungsgemäße Verfahren ermöglicht die Dateneingabe bzw. die Authentifizierung eines Kunden bzw. Benutzers zur Herstellung einer Verbindung zwischen dem Telekommunikationsnetz 5 und dem integrierten Zugangsgerät 10 ohne Zuhilfenahme eines Computers oder eines zusätzlichen Endgeräts zur Datenerfassung. Die Interaktion wird erfindungsgemäß vom Benutzer bzw. Endkunden durch ein herkömmliches Telefon entweder durch Vorsprechen bzw. Sprechen von Ziffern Buchstaben oder sonstigen Spracheingaben - wie etwa auch Erkennungssätze - oder auch durch Eingabe von Ziffern über die Telefontastatur durchgeführt. Hierbei kann es erfindungsgemäß auch vorgesehen sein, dass die Eingabe von Buchstaben, insbesondere des lateinischen Alphabets, durch die (ggf. mehrfach hintereinander erfolgende) Eingabe von Ziffern umgesetzt wird, wie dies beispielsweise auf einer herkömmlichen Telefontastatur geschieht, etwa könnte die Eingabe des Buchstabens "C" einer dreimaligen Eingabe der Ziffer 2 entsprechen und die Eingabe des Buchstabens "K" einer zweimaligen Eingabe der Ziffer 5 usw. Ferner kann es erfindungsgemäß vorgesehen sein, dass auch umgangssprachliche Eingaben, wie beispielsweise "vier mal die Eins" oder "zwo" statt "zwei" möglich sind.

Zur Herstellung des physikalischen bzw. physischen Kommunikationskanals (erster Schritt des erfindungsgemäßen Verfahrens) muss zunächst das integrierte Zugangsgerät 10 verkabelt werden, insbesondere mit dem Telekommunikationsnetz 5 in Form eines Breitbandanschlusses. Gemäß einer bevorzugten Ausführungsform der Erfindung ist es vorgesehen, dass ein Telefongerät 11 (vgl. Figur 1) mit dem integrierten Zugangsgerät 11 verbunden wird. Dies kann beispielsweise über eine drahtgebundene Verbindung beispielsweise mittels eines Stecker-Buchsen-Kontakts von herkömmlichen analogen Telefongeräten vorgesehen sein oder auch über eine drahtgebundene Verbindung über einen Stecker-Buchsen-Kontakt gemäß einem anderen Standard, beispielsweise von herkömmlichen ISDN-Telefongeräten. Alternativ hierzu ist auch eine drahtlose Anbindung des Telefongeräts 11 mit dem integrierten Zusatzgerät 10 möglich. Hierzu ist eine entsprechende Drahtlos-Schnittstelle in dem Telefongerät 11 und in dem integrierten Zugangsgerät, insbesondere eine Bluetooth-Schnittstelle erforderlich.

Nach der Installation und Verkabelung des integrierten Zugangsgeräts 10 mit dem Breitbandanschluss, d. h. mit dem Zugangsknoten des Telekommunikationsnetzes 5, dem Telefongerät 11 und der Stromversorgung, wird eine Erkennung und Identifizierung des integrierten Zugangsgeräts 10 durch das Telekommunikationsnetz 5 durchgeführt (zweiter Schritt des erfindungsgemäßen Verfahrens) und es startet der Kunde die Konfigurierung des integrierten Zugangsgeräts 10. Optional wird das integrierte Zugangsgerät 10 nach dem ersten Anschließen mit einer neueren Software versorgt, insbesondere der neuesten Firmware (Firmware Update Service).

Durch Anwahl einer beliebigen Rufnummer wird der Kunde automatisch mit dem interaktiven Sprachdialogsystem (auch IVR-System, interactive voice response system) verbunden (dritter Schritt des erfindungsgemäßen Verfahrens). Diese Verbindung geschieht erfindungsgemäß durch eine im integrierten Zugangsgerät 10 hinterlegte Rufnummer oder aber durch eine aufgrund der Identifizierung des integrierten Zugangsgeräts seitens des Telekommunikationsnetzes 5 generierte Rufnummer. Durch die Identifikation des integrierten Zugangsgeräts 10 durch das Telekommunikationsnetz 5 wird erfindungsgemäß insbesondere eine Verbindung auf die bereitgestellte sogenannte IN-Schnittstelle hergestellt und der Anruf an das interaktive Sprachdialogsystem übergeben.

Die Konfigurierung des integrierten Anschlussgeräts 10 erfolgt nun erfindungsgemäß beispielsweise gemäß dem in Figur 2 dargestellten Verfahren bzw. Ablaufdiagramm eines Verfahrens. In einem ersten Punkt 21 des Ablaufdiagramms wird erfindungsgemäß die Sprachverbindung hergestellt und eine Verbindung zu dem Sprachdialogsystem bzw. dem interaktiven Sprachdialogsystem hergestellt. Zur Realisierung des interaktiven Sprachdialogsystems umfasst das Telekommunikationsnetz 5 eine entsprechende Funktionalität innerhalb eines Netzknotens oder Netzelements, beispielsweise innerhalb des Internet-Protokoll-Netz-Randknotens 30 oder auch in einer Steuereinheit des Telekommunikationsnetzes 5.

An einem zweiten Punkt 22 des Ablaufdiagramms wird seitens des interaktiven Sprachdialogsystems eine Vertrags-Identifizierungsinformation erfragt.

Wenn im zweiten Punkt 22 keine Vertrags-Identifizierungsinformation eingegeben wurde bzw. erkannt wurde, wird zu einem siebten Punkt 27 des Ablaufdiagramms verzweigt, welcher einem Fehlerfall bzw. einer Fehlerbehandlung entspricht, bei der beispielsweise ein menschlicher Mitarbeiter den Anruf übernimmt. Falls eine Vertrags-Identifizierungsinformation seitens des interaktiven Sprachdialogsystems im zweiten Punkt 22 des Ablaufdiagramms empfangen wurde (welche insbesondere auch dem erwarteten (d.h. "richtigen") Format entspricht), wird in einem dritten Punkt 23 des Ablaufdiagramms geprüft, ob die eingegebene Vertrags-Identifizierungsinformation vorhanden bzw. korrekt ist. Falls dies der Fall ist, wird zu einem vierten Punkt 24 des Ablaufdiagramms verzweigt, andernfalls wird zum siebten Punkt 27 des Ablaufdiagramms verzweigt.

Im vierten Punkt 24 des Ablaufdiagramms wird beispielsweise eine weitere Vertrags-Identifizierungsinformation abgefragt, beispielsweise ein Passwort. Im weiteren Verlauf des Ablaufdiagramms wird wiederum geprüft, ob die eingegebene weitere Vertrags-Identifizierungsinformation korrekt ist. Falls dies der Fall ist, wird zu einem fünften Punkt 25 des Ablaufdiagramms verzweigt, andernfalls wird zum siebten Punkt 27 des Ablaufdiagramms verzweigt. Im fünften Punkt 25 des Ablaufdiagramms wird die (insbesondere netzseitig vorzunehmende) Konfigurierung des integrierten Zugangsgeräts 10 eingeleitet bzw. gestartet und bei dessen Abschluss zu einem sechsten Punkt 26 des Ablaufdiagramms verzweigt. Im sechsten Punkt 26 des Ablaufdiagramms wird der Sprachdialog beendet. Die Vertrags-Identifizierungsinformation bzw. die weitere Vertrags-Identifizierungsinformation ist hierbei insbesondere in Form einer persönlichen Benutzernummer und eines Passworts vorgesehen. Diese Informationen werden erfindungsgemäß insbesondere mittels Post dem Endkunden bzw. Benutzer (insbesondere in einem gegenüber Öffnen bzw. Einsichtnahme geschützten Briefumschlag bzw. Briefsendung) versandt. Lediglich der Vollständigkeit halber wird ein einem achten Punkt 28 des Ablaufdiagramms die Verbindung beendet, beispielsweise aufgrund einer technischen Störung.

Der im fünften Punkt 25 des Ablaufdiagramms erfolgende Start der Konfigurierung des integrierten Zugangsgeräts 10 (vierter Schritt) wird erfindungsgemäß insbesondere netzseitig gestartet (per Remote). Unter anderem werden hierbei die für den Kunden netzseitig bereitgestellten IP-Rufnummern (geografische Rufnummern des Kunden) zum integrierten Zugangsgerät 10 übertragen. Bei fehlerhafter Eingabe oder systemtechnischer Nicht-Erkennung wird der Kunde im siebten Punkt 27 des Ablaufdiagramms mit einem Agenten, insbesondere einem menschlichen Mitarbeiter, verbunden. Der Agent hat die Möglichkeit, den Authentifizierungsvorgang für das integrierte Zugangsgerät 10 anzustoßen bzw. die Konfigurierung des integrierten Zugangsgeräts abzuschließen. Erfindungsgemäß ist besonders bevorzugt vorgesehen, dass während der Konfigurierungsphase durch gewisse Anzeigen am integrierten Zugangsgerät 10 angezeigt wird, ob der laufende Kommunikationsprozess ordnungsgemäß abläuft oder aber nicht ordnungsgemäß abläuft. Sobald seitens des Geräts der Abschluss der Konfigurierung des integrierten Zugangsgeräts 10 angezeigt wird, ist der Prozess erfolgreich beendet bzw. die Konfigurierung bzw. Auto-Konfiguration abgeschlossen. Der Kunde kann somit im Ergebnis die vom Telekommunikationsnetz 5 bereit gestellten Dienste uneingeschränkt nutzen.

Erfindungsgemäß ist eine solche Konfigurierung des integrierten Zugangsgeräts 10 für eine Vielzahl von vom Telekommunikationsnetz 5 bereit gestellten Diensten möglich. Insbesondere ist erfindungsgemäß vorgesehen, dass die erfindungsgemäße Durchführung der Konfigurierung des integrierten Anschlussgeräts 10 für den Fall erfolgt, dass das integrierte Zugangsgerät 10 für eine Telefonie-Dienstleistung genutzt werden soll und/oder dass das integrierte Zugangsgerät 10 für eine Telefonie-Dienstleistung und eine Internet-Konnektivität genutzt werden soll und/oder dass das integrierte Zugangsgerät 10 für eine IPTV-Anwendung genutzt werden soll (sogenanntes single-play, double play or triple play).

Erfindungsgemäß ist es also insbesondere vorgesehen, dass der erste Schritt des erfindungsgemäßen Verfahrens vor dem zweiten Schritt des erfindungsgemäßen Verfahrens durchgeführt wird, dass der zweite Schritt des erfindungsgemäßen Verfahrens vor dem dritten Schritt des erfindungsgemäßen Verfahrens durchgeführt wird, und dass der dritte Schritt des erfindungsgemäßen Verfahrens vor dem vierten Schritt des erfindungsgemäßen Verfahrens durchgeführt wird.

## Patentansprüche

1. Verfahren zum Aufbau und zur Konfigurierung einer Verbindung zwischen einem Telekommunikationsnetz (5) und einem integrierten Zugangsgerät (10) (IAD, integrated access device) über einen Zugangsknoten (20) des Telekommunikationsnetzes (5), wobei das Verfahren die folgenden Schritte umfasst:
-- in einem ersten Schritt die Erstellung eines physikalischen Kommunikationskanals zwischen dem Zugangsknoten (20) des Telekommunikationsnetzes (5) und dem integrierten Zugangsgerät (10),
-- in einem zweiten Schritt die Erkennung und Identifizierung des integrierten Zugangsgeräts (10) durch das Telekommunikationsnetz (5),
-- in einem dritten Schritt das Starten eines interaktiven Sprachdialogsystems über eine Sprachverbindung, **dadurch gekennzeichnet, dass**
-- in einem vierten Schritt die Konfigurierung des integrierten Zugangsgeräts (10) durch Verwendung der Sprachverbindung, wobei zur Konfigurierung des integrierten Zugangsgeräts (10) Konfigurationsdaten über den physikalischen Kommunikationskanal zum integrierten Zugangsgerät (10) übertragen werden, wobei der erste Schritt vor dem zweiten Schritt durchgeführt wird, wobei der zweite Schritt vor dem dritten Schritt durchgeführt wird, wobei der dritte Schritt vor dem vierten Schritt durchgeführt wird.

2. Verfahren nach Anspruch 1, **dadurch gekennzeichnet, dass** die im dritten Schritt benutzte Sprachverbindung eine Telefonverbindung ohne Benutzung des integrierten Zugangsgeräts (10) und des physikalischen Kommunikationskanals zwischen dem Zugangsknoten (20) des Telekommunikationsnetzes (5) und dem integrierten Zugangsgerät (10) ist, insbesondere eine Sprachverbindung unter Verwendung eines Mobilfun ktelefongeräts.

3. Verfahren nach Anspruch 1, **dadurch gekennzeichnet, dass** die im dritten Schritt benutzte Sprachverbindung eine Telefonverbindung unter Benutzung des integrierten Zugangsgeräts (10) und unter Benutzung eines mit dem integrierten Zugangsgerät (10) verbundenen Telefongeräts (11) ist.

4. Verfahren nach Anspruch 3, **dadurch gekennzeichnet, dass** zum Aufbau der im dritten Schritt benutzten Sprachverbindung eine Rufnummer benutzt wird,
-- die im integrierten Zugangsgerät (10) gespeichert ist, oder
-- die nach der Erkennung und Identifizierung des integrierten Zugangsgeräts (10) durch das Telekommunikationsnetz (5) dem physikalischen Kommunikationskanal zwischen dem Zugangsknoten (20) des Telekommunikationsnetzes (5) und dem integrierten Zugangsgerät (10) zugeordnet wird.

5. Verfahren nach einem der vorhergehenden Ansprüche, **dadurch gekennzeichnet, dass** über die im dritten Schritt benutzte Sprachverbindung wenigstens eine Vertrags-Identifizierungsinformation zum Telekommunikationsnetz (5) übertragen wird.

6. Verfahren nach einem der vorhergehenden Ansprüche, **dadurch gekennzeichnet, dass** der physikalische Kommunikationskanal einer auf den Zugangsknoten (20) bezogenen Netzzugangs-Identifizierungsinformation zugeordnet ist, wobei das Telekommunikationsnetz (5) eine öffentliche oder private Internet Protokoll Adresse zum integrierten Zugangsgerät (10) und zur Benutzung durch das integrierte Zugangsgerät (10) zur Kommunikation mit einem Internet-Protokoll-Netz-Randknoten (30) (Internet Protocol Edge Node) des Telekommunikationsnetzes (5) überträgt, wobei die Internet Protokoll Adresse mit der Netzzugangs-Identifizierungsinformation und mit einer Internet Protokoll Sitzung (IP session) oder einer Internet Protokoll Verbindung verknüpft ist, welche einen zwischen dem Internet-Protokoll-Netz-Randknoten (30) des Telekommunikationsnetzes (5) und dem integrierten Zugangsgerät (10) initiierten logischen Kommunikationskanal realisiert.

7. Verfahren nach Anspruch 6, **dadurch gekennzeichnet, dass** das Telekommunikationsnetz (5) der öffentlichen oder privaten Internet Protokoll Adresse initial ein erstes Funktionalitätsniveau zuordnet, dass das Telekommunikationsnetz (5) der öffentlichen oder privaten Internet Protokoll Adresse ein zweites Funktionalitätsniveau für den Fall zuordnet, dass das Telekommunikationsnetz (5) in der Lage ist, die Netzzugangs-Identifizierungsinformation mit einer Vertrags-Identifizierungsinformation zu föderieren.

8. Verfahren nach einem der Ansprüche 6 oder 7, **dadurch gekennzeichnet, dass** der logische Kommunikationskanal durch Benutzung von wenigstens einer Authentifizierungsinformation aufgebaut wird, wobei die wenigstens eine Authentifizierungsinformation eine innerhalb des Telekommunikationsnetzes (5) existierende Vertrauensinformation ist.

9. System, bestehend aus einem integrierten Zugangsgerät (10) (IAD, integrated access device) und einem Telekommunikationsnetzwerk, zum Aufbau und zur Konfigurierung einer Verbindung zwischen einem Telekommunikationsnetz (5) und dem integrierten Zugangsgerät (10) über einen Zugangsknoten (20) des Telekommunikationsnetzes (5), wobei das integrierten Zugangsgerät (10) zur Erstellung eines physikalischen Kommunikationskanals zwischen dem Zugangsknoten (20) des Telekommunikationsnetzes (5) und dem integrierten Zugangsgerät (10) vorgesehen ist, wobei das integrierte Zugangsgerät (10) zur Erkennung und Identifizierung durch das Telekommunikationsnetz (5) vorgesehen ist, **dadurch gekennzeichnet, dass** das integrierte Zugangsgerät (10) mithilfe eines über eine Sprachverbindung gestartetes interaktives Sprachdialogsystem konfigurierbar ist und wobei zur Konfigurierung des integrierten Zugangsgeräts (10) ferner die Übertragung von Konfigurationsdaten über den physikalischen Kommunikationskanal vorgesehen ist.

10. Computerprogramm mit Programmcodemitteln, mit deren Hilfe alle Schritte eines Verfahrens nach einem der Ansprüche 1 bis 8 durchgeführt werden, wenn das Computerprogramm auf programmierbaren Einrichtungen des Systems nach Anspruch 12 ausgeführt wird.

## Claims

1. Method of establishing and configuring a connection between a telecommunications network (5) and an integrated access device (IAD) (10) via an access node (20) of the telecommunications network (5), wherein the method comprises the steps of:
- in a first step, creating a physical communications channel between the access node (20) of the telecommunications network (5) and the integrated access device (10),
- in a second step, recognising and identifying the integrated access device (10) by means of the telecommunications network (5),
- in a third step, starting an interactive voice dialogue system via a voice connection,
**characterised by**
- in a fourth step, configuring the integrated access device (10) by using the voice connection, wherein, in order to configure the integrated access device (10), configuration data are transmitted via the physical communications channel to the integrated access device (10), wherein the first step is performed prior to the second step, wherein the second step is performed prior to the third step, wherein the third step is performed prior to the fourth step.

2. Method as claimed in claim 1, **characterised in that** the voice connection used in the third step is a telephone connection without the use of the integrated access device (10) and of the physical communications channel between the access node (20) of the telecommunications network (5) and the integrated access device (10), in particular a voice connection using a mobile telephone device.

3. Method as claimed in claim 1, **characterised in that** the voice connection used in the third step is a telephone connection without the use of the integrated access device (10) and with the use of a telephone device (11) connected to the integrated access device (10).

4. Method as claimed in claim 3, **characterised in that**, in order to establish the voice connection used in the third step, a call number is used
- which is stored in the integrated access device (10), or
- which, after recognition and identification of the integrated access device (10) by means of the telecommunications network (5), is allocated to the physical communications channel between the access node (20) of the telecommunications network (5) and the integrated access device (10).

5. Method as claimed in any one of the preceding claims, **characterised in that** at least one item of contract identification information is transmitted to the telecommunications network (5) via the voice connection used in the third step.

6. Method as claimed in any one of the preceding claims, **characterised in that** the physical communications channel is allocated to an item of network access identification information related to the access node (20), wherein the telecommunications network (5) transmits a public or private Internet protocol address to the integrated access device (10) and for use by the integrated access device (10) for communication with an Internet protocol edge node (30) of the telecommunications network (5), wherein the Internet protocol address is linked to the network access identification information and to an Internet protocol session (IP session) or an Internet protocol connection which produces a logical communications channel which is initiated between the Internet protocol edge node (30) of the telecommunications network (5) and the integrated access device (10).

7. Method as claimed in claim 6, **characterised in that** the telecommunications network (5) initially allocates to the public or private Internet protocol address a first functionality level, **in that** the telecommunications network (5) allocates to the public or private Internet protocol address a second functionality level in the event that the telecommunications network (5) is able to federate the network access identification information with an item of contract identification information.

8. Method as claimed in any one of claims 6 or 7, **characterised in that** the logical communications channel is established by using at least one item of authentication information, wherein the at least one item of authentication information is an item of confidential information existing within the telecommunications network (5).

9. System, consisting of an integrated access device (IAD) (10) and a telecommunications network, for establishing and for configuring a connection between a telecommunications network (5) and the integrated access device (10) via an access node (20) of the telecommunications network (5), wherein the integrated access device (10) is provided for creating a physical communications channel between the access node (20) of the telecommunications network (5) and the integrated access device (10), wherein the integrated access device (10) is provided for recognition and identification by means of the telecommunications network (5), **characterised in that** the integrated access device (10) can be configured with the aid of an interactive voice dialogue system started via a voice connection and wherein, in order to configure the integrated access device (10), provision is also made for transmitting configuration data via the physical communications channel.

10. Computer program comprising program code means, with the aid of which all of the step of a method as claimed in any one of claims 1 to 8 are performed when the computer program is executed on programmable devices of the system as claimed in claim 12.

## Revendications

1. Procédé de création et de configuration d'une liaison entre un réseau de télécommunication (5) et un moyen d'accès intégré (10) (IAD, *integrated access device*) par le biais d'un noeud d'accès (20) du réseau de télécommunication (5), dans lequel le procédé comprend les étapes suivantes :
- dans une première étape, l'élaboration d'un canal de communication physique entre le noeud d'accès (20) du réseau de télécommunication (5) et le moyen d'accès intégré (10),
- dans une deuxième étape, la détection et l'identification du moyen d'accès intégré (10) par l'intermédiaire du réseau de télécommunication (5),
- dans une troisième étape, le lancement d'un serveur vocal interactif par le biais d'une liaison vocale,
**caractérisé par**,
- dans une quatrième étape, la configuration du moyen d'accès intégré (10) en utilisant la liaison vocale, dans lequel, pour la configuration du moyen d'accès intégré (10), des données de configuration sont transmises au moyen d'accès intégré (10) par le biais du canal de communication physique, la première étape étant mise en oeuvre avant la deuxième étape, la deuxième étape étant mise en oeuvre avant la troisième étape, la troisième étape étant mise en oeuvre avant la quatrième étape.

2. Procédé selon la revendication 1, **caractérisé en ce que** la liaison vocale utilisée dans la troisième étape est une liaison téléphonique sans utiliser le moyen d'accès intégré (10) et le canal de communication physique entre le noeud d'accès (20) du réseau de télécommunication (5) et le moyen d'accès intégré (10), en particulier une liaison vocale en utilisant un appareil de radiotéléphonie mobile.

3. Procédé selon la revendication 1, **caractérisé en ce que** la liaison vocale utilisée dans la troisième étape est une liaison téléphonique en utilisant le moyen d'accès intégré (10) et en utilisant un appareil de téléphonie (11) relié au moyen d'accès intégré (10).

4. Procédé selon la revendication 3, **caractérisé en ce que**, pour la création de la liaison vocale utilisée dans la troisième étape, un numéro de téléphone est utilisé,
- lequel est enregistré dans le moyen d'accès intégré (10), ou
- lequel est associé, après la détection et l'identification du moyen d'accès intégré (10) par l'intermédiaire du réseau de télécommunication (5), au canal de communication physique entre le noeud d'accès (20) du réseau de télécommunication (5) et le moyen d'accès intégré (10).

5. Procédé selon une des revendications précédentes, **caractérisé en ce que**, par le biais de la liaison vocale utilisée dans la troisième étape, au moins une information d'identification contractuelle est transmise au réseau de télécommunication (5).

6. Procédé selon une des revendications précédentes, **caractérisé en ce que** le canal de communication physique est associé à une information d'identification d'accès au réseau relative au noeud d'accès (20), dans lequel le réseau de télécommunication (5) transmet au moyen d'accès intégré (10) une adresse de protocole Internet publique ou privée et pour l'utilisation par l'intermédiaire du moyen d'accès intégré (10) pour la communication avec un noeud de périphérie de réseau de protocole Internet (30) (*Internet Protocol Edge Node*) du réseau de télécommunication (5), dans lequel l'adresse de protocole Internet est associée à l'information d'identification d'accès au réseau et à une session de protocole Internet (*IP session*) ou à une liaison de protocole Internet qui réalise un canal de communication logique initié entre le noeud de périphérie de réseau de protocole Internet (30) du réseau de télécommunication (5) et le moyen d'accès intégré (10).

7. Procédé selon la revendication 6, **caractérisé en ce que** le réseau de télécommunication (5) associe initialement à l'adresse de protocole Internet publique ou privée un premier niveau de fonctionnalité, **en ce que** le réseau de télécommunication (5) associe à l'adresse de protocole Internet publique ou privée un second niveau de fonctionnalité pour le cas où le réseau de télécommunication (5) est en mesure de fédérer l'information d'identification d'accès au réseau avec une information d'identification contractuelle.

8. Procédé selon une des revendications 6 ou 7, **caractérisé en ce que** le canal de communication logique est construit en utilisant au moins une information d'authentification, dans lequel l'au moins une information d'authentification est une information de confiance existant à l'intérieur du réseau de télécommunication (5).

9. Système, composé d'un moyen d'accès intégré (10) (IAD, integrated access device) et d'un réseau de télécommunication, pour créer et pour configurer une liaison entre un réseau de télécommunication (5) et le moyen d'accès intégré (10) par le biais d'un noeud d'accès (20) du réseau de télécommunication (5), dans lequel le moyen d'accès intégré (10) est prévu pour l'élaboration d'un canal de communication physique entre le noeud d'accès (20) du réseau de télécommunication (5) et le moyen d'accès intégré (10), dans lequel le moyen d'accès intégré (10) est prévu pour la détection et l'identification par l'intermédiaire du réseau de télécommunication (5), **caractérisé en ce que** le moyen d'accès intégré (10) est configurable à l'aide d'un serveur vocal interactif lancé par le biais d'une liaison vocale et dans lequel, pour la configuration du moyen d'accès intégré (10), la transmission de données de configuration est en outre prévue par le biais du canal de communication physique.

10. Programme d'ordinateur comprenant des moyens de code de programme qui permettent de mettre en oeuvre toutes les étapes d'un procédé selon une des revendications 1 à 8, lorsque le programme d'ordinateur est exécuté sur des dispositifs programmables du système selon la revendication 12.
